(19) Europäisches Patentamt
European Patent Office
Office européen des brevets

(11) Publication number: 0 202 849
A2

(12) # EUROPEAN PATENT APPLICATION

(21) Application number: 86303635.6

(22) Date of filing: 13.05.86

(51) Int. Cl.[4]: C 08 J 3/08
B 01 D 13/04, C 02 F 1/44
C 08 L 81/06, C 08 J 5/22

(30) Priority: 23.05.85 GB 8513103

(43) Date of publication of application: 26.11.86 Bulletin 86/48

(84) Designated Contracting States: AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Cardew, Peter Townsend
23 Wallingford Road
Davyhulme Urmston, Manchester(GB)

(72) Inventor: Holmes, David Robert
13 Bracken Way
Frodsham Cheshire(GB)

(72) Inventor: Smith, John William
17 Avon Close
Walton Liverpool(GB)

(74) Representative: James, David Gomer et al,
Imperial Chemical Industries PLC Legal Department: Patents Po Box 6 Bessemer Road
Welwyn Garden City Herts, AL7 1HD(GB)

(54) ## Solution of polymeric material.

(57) A polymer solution contains a sulphonated polyarylethersulphone in a solvent mixture containing at least two components, one of which is a hydroxy group containing compound selected from water, an alkanol or a glycol and the other of which is a ketone. The solvent mixture typically has a delta-H in the range from 3 to 8.5; a delta-P in the range from 4 to 8 and a delta-D in the range 7.2 to 9.5. Each component of the solvent mixture is a liquid or low melting solid which is a non-solvent or poor solvent for the sulphonated polyarylethersulphone. Solvent mixtures which may be used include water and methyl ethyl ketone; water and acetone and ethylene glycol and acetone. The solutions can be used to produce an asymmetric membrane.

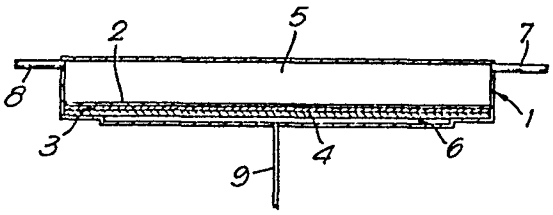


EP 0 202 849 A2

Croydon Printing Company Ltd

Solutions of Polymeric Materials

This invention relates to solutions of polymeric materials and more particularly to the use of such solutions for the preparation of asymmetric semi-permeable membranes of sulphonated polyarylethersulphones.

Membranes which are useful in separation processes such as ultrafiltration and reverse osmosis may be prepared by casting solutions of polymeric materials. Asymmetric semi-permeable membranes, which can be used for reverse-osmosis, can be prepared by casting a solution of a film-forming ion-exchange material on a support and then coagulating the film using a non-solvent for the ion-exchange material. Asymmetric semi-permeable membranes are characterised by having a thin dense layer which functions as the active layer of the membrane and a thicker porous layer which functions as a reinforcing support for the active layer.

British Patent Specification No 1258851 discloses sulphonated polyarylethersulphones having a specified structure. These materials are disclosed as being ion exchange resins and as being suitable for the production of membranes for a number of applications including electrodialysis, fuel cell applications, osmosis and reverse osmosis. European Patent Specification No 8894 discloses alternative sulphonated polyarylethersulphones which may be prepared by a simple and readily controlled sulphonation technique and these materials also may be used to produce membranes for desalination and other processes.

For the preparation of a solution of a sulphonated polyarylether, for example a sulphonated polyarylethersulphone, various known solvents for the polymer have been proposed, especially aprotic polar solvents such as dimethylformamide and dimethylsulphoxide. Whilst such solvents can be used singly, it is desirable for the casting solution to contain a mixture of liquids and/or swelling agents and to include at least one material which is a non-solvent for the polymer, for example water, such non-solvent facilitating coagulation of the polymer film and formation of the aforementioned asymmetric structure.

In a series of papers by D R Lloyd and co-workers, the preparation of membranes from sulphonated polyarylethersulphones using solvent mixtures consisting of two components, each of which is essentially a non-solvent for the particular sulphonated polyarylethersulphone is reported. In many of the Lloyd et al papers, the polymer used is generally similar to that used in the working examples of British Patent Specification No 1258851, see in particular ACS Symposium Series 153, Synthetic Membranes, Volume 1, edited by A F Turbak 1981 at pages 327 to 350; and also see Desalination, 46 (1983), at pages 327 to 334 and Journal of Membrane Science, 22 (1985) at pages 1 to 29. The use of the polymer described in European Patent Specification No 8894 is disclosed by Lloyd et al in Polym. Mater. Sci. Eng., 50, April 1984, at pages 152 to 155 and in more detail in Poly. Mater. Sci. Eng., 51, 1984, at pages 713 to 717. Using the polymers of British Patent Specification No 1258851, Lloyd et al typically use a mixture of tetrahydrofuran and formamide as the solvent. The solvent mixture used with the polymers of European Patent Specification No 8894 is a mixture of ethyl formate and formamide. Another solvent mixture noted in some of the Lloyd et al papers is a mixture of dioxane and formamide but no details of the use of this mixture are given. We have found that tetrahydrofuran tends to complex with the polymers of European Patent Specification No 8894 and we have not been able to obtain a satisfactory solution for producing membranes when using a polymer of the type disclosed in European Patent Specification No 8894 with a solvent mixture of tetrahydrofuran and formamide. Furthermore, formamide, which is extensively used by Lloyd et al, is reported to have a TLV of 20 ppm and hence represents a toxic hazard in use.

In our non prior published European Patent Application Publication No 142973 we have disclosed solutions of sulphonated polyarylethersulphones in a solvent containing at least three components having specified characteristics. By the use of such solutions, asymmetric semi-permeable membranes can be produced which have a useful combination of flux and salt rejection properties. We have now found other solvent mixtures may be used to obtain polymer solutions which are suitable for the production of asymmetric

semi-permeable membranes.

According to the present invention there is provided a solution of a sulphonated polyarylethersulphone in a solvent mixture wherein the solvent mixture contains at least two components, each of which is a liquid or a low melting solid which is a non- solvent or poor solvent for the sulphonated polyarylethersulphone, and one of which is a hydroxy group containing comound selected from water, an alkanol or a glycol and the other of which is a ketone.

For convenience hereafter, the sulphonated polyarylethersulphone will be referred to as the "sulphonated polysulphone".

The components of the solvent mixture are liquids or low melting solids at ambient temperature. By "low melting solid" is mean a material which is solid at ambient temperature and has a melting point of not more than 50°C.

The components of the solvent mixture are non-solvents or poor solvents for the sulphonated polysulphone and the polymer is typically soluble in each of the components in an amount of not more than 5% by weight, preferably less than 1% by weight, especially less than 0.1% by weight.

The components of the solvent mixture are such, and are present in such proportions, that the solvent mixture has a delta-H, a delta-P and a delta-D in a specified range. More specifically the solvent mixture has a delta-H in the range from 3 to 8.5; a delta-P in the range from 4 to 8 and a delta-D in the range from 7.2 to 9.5.

The components of the solvent mixture are such, and the proportions thereof are such that, at least in the presence of the sulphonated polysulphone, the solvent mixture forms a single liquid phase and none of the components of the solvent mixture reacts or complexes with any other component of the solvent mixture or with the sulphonated polysulphone.

The solvent mixture conveniently consists only of the hydroxy group containing compound (hereafter simply the "hydroxy compound") and the ketone.

In a solvent mixture consisting of two components, it is preferred that

a) one component has a delta-P of less than 6 and the other component has a delta-P of at least 6; and/or

b) one component has a delta-H of less than 5 and the other component has a delta-H of at least 5. In many two component solvent mixtures in accordance with the present invention, both of the conditions a) and b) are satisfied.

In referring both to preferred solvent mixtures and to preferred components of the solvent mixtures, reference is made to delta-H, delta-D and delta-P. Delta-H, delta-D and delta-P are components of the solubility parameter of the solvent mixture, and of each material which is a component of the solvent mixture, and are related by the expression.

$$(\text{delta-O})^2 = (\text{delta-H})^2 + (\text{delta-D})^2 + (\text{delta-P})^2$$

where delta-O is the solubility parameter and is given by the expression

$$(\text{delta-O}) = \left(\frac{\Delta E_v}{V}\right)^{\frac{1}{2}}$$

where $\Delta E_v$ is the molar cohesive energy which approximates to $\Delta H - RT$;

$\Delta H$ is the latent heat of vaporisation;

R is the gas constant;

T is the absolute temperature; and

V is the molar volume.

More specifically, delta-H is the hydrogen bonding component of the solubility parameter, delta-D is the dispersion component of the solubility parameter and delta-P is the polar component of the solubility parameter.

The concept of solubility parameters is discussed in many papers in the scientific literature including, inter alia, a paper by C M Hansen in Ind. Eng. Chem. Prod. Res. Dev., 8 (March) 1969, pages 2 to 11. Other papers in which solubility parameters are considered are, inter alia, Chemical Reviews, 75 (1975) pages 731 to 753, and Kirk-Othmer "Encyclopedia of Chemical Technology" Second Edition, Supplemental Volume (1971) pages 889 to 910.

A tabulation of values of delta-H, delta-D and delta-P is given in the Hansen paper and these may be used to determine

suitable materials for use as components of the solvent mixture.

The hydroxy compound may be an alkanol and is preferably a saturated aliphatic alkanol. Both the alkanols and glycols may include ether linkages in the hydrocarbon chain. The ketone is preferably a saturated aliphatic ketone.

One component of the solvent mixture may be a material having a delta-P of less than 6 and also a delta-H of less than 5. Such materials include acetone and methyl ethyl ketone. Materials of the foregoing type are preferably used together with a material having a delta-P of at least 6 and a delta-H of at least 5. Materials of this latter type include methanol; diethylene glycol; and water.

Other materials which may be used as a component of the solvent mixture are those which have a delta-P of less than 6 and a delta-H of at least 5. Such other materials include ethanol; 2-propanol; ethylene glycol; 2-ethoxyethanol and 2-butoxyethanol. These other materials are preferably used together with one or more further materials to give a solvent mixture having a delta-H, a delta-P and a delta-D in the preferred ranges specified herein.

Other materials and combinations of materials may be used to obtain the solvent mixture provided such materials and the combinations thereof result in a solution of polymer, and solvent mixture, having the characteristics specified herein.

We prefer that the components of the solvent mixture are such that the solvent mixture is relatively non-hazardous and especially is of negligible or low toxicity. Preferably each component of the solvent mixture has a TLV of not less than about 100 ppm and especially not less than 200 ppm. Values of TLV are given in "TLVs for Chemical Substances and Physical Agents in the Workroom Environment", published by the American Conference of Governmental Industrial Hygenists in 1975. As is discussed in more detail hereafter, it is preferred that one of the components of the solvent mixture is relatively volatile and it will be appreciated that such materials may have a relatively low flash temperature. Thus, handling of solutions containing such materials is desirably effected in the absence of a source of ignition.

Two component solvent mixtures in accordance with the mixtures present invention include water and methyl ethyl ketone;

water and acetone and ethylene glycol and acetone.

The sulphonated polysulphone which is dissolved in the solvent mixture is preferably one which has repeating units of the formula I

$$\text{I} \quad \left[ \left( Ph - O \right)_n Ph - SO_2 \right]$$

wherein

Ph represents a phenylene residue, preferably a para-phenylen residue, wherein at least some of the groups Ph are sulphonated; and

n is 1 or 2 and the value of n can differ along the polymer chain.

Whilst the sulphonated polysulphone may be one in which the value of n is only one or is only two, we prefer to use a copolymer in which the value of n is one for some repeat units and is two for other repeat units, polymers of this type being described, inter alia, in European Patent Specification No 8894. The preferred polymers have repeat units of the formula:-

$$\text{II} \quad \left( Ph^1 - O - Ph^2 - O - Ph^1 - SO_2 \right)$$

together with the repeat units of the formula

$$\text{III} \quad \left( Ph^1 - O - Ph^1 - SO_2 \right)$$

wherein

$Ph^1$ represents a phenylene residue, preferably a para-phenylene residue;

$Ph^2$ represents a phenylene residue, preferably a para-phenylene residue, having one or two groups $-SO_3M$;

M is a hydrogen atom, a metal atom and/or a group $NR_4$, wherein the groups M may be the same or different and the proportion of the groups M is sufficient to combine with the unsatisfied valencies of the group $-SO_3$; and

R is a hydrogen atom or an alkyl group.

The sulphonated polysulphone may also include a proportion of unsulphonated copolymer having repeat units of the formula

IV $\left( Ph^1 - O - Ph^1 - O - Ph^1 - SO_2 \right)$

together with the repeat units of the formula II and formula III, wherein $Ph^1$ is as defined.

In the repeat units of the formula II, when $Ph^2$ is an ortho- or para- phenylene residue, there is typically only one group $-SO_3M$ whereas when $Ph^2$ is a meta-phenylene residue there are typically two groups $-SO_3M$. When $Ph^2$ is an ortho-phenylene residue, the $-SO_3M$ group is located in a position which is para- to one ether group and meta- to the other ether group, any further sulphonation occurring to locate the $-SO_3M$ in positions meta- to each other. When $Ph^2$ is a para-phenylene residue, the $-SO_3M$ group is located in a position ortho-to one ether group and meta-to the other ether group. When $Ph^2$ is a meta-phenylene residue, the $-SO_3M$ groups are located in the position ortho-to one ether group and para-to the other ether group.

The sulphonated copolymers may be prepared by sulphonating a copolymer consisting of repeat units III and IV. The sulphonation is readily effected by dissolving the copolymer in concentrated sulphuric acid (9 w/w) at ambient temperature and agitating the mixture for a 8% sufficient time for sulphonation of essentially all of the sub-units - O - $Ph^1$ - in the repeat units of formula IV. The copolymers which are0 - subjected to sulphonation suitably have from 1 to 99 mole % of units IV and correspondingly from 99 to 1 mole % of units III, and especially from 2.5 to 67 mole % of units IV and correspondingly from 97.5 to 33 mole % of units III. Sulphonation is desirably effected to convert at least 90% of the units IV to the units II. Sulphonation using concentrated sulphuric acid is described in European Patent Specification No 8894.

The sulphonated polysulphones are polymeric materials of high molecular weight such that the reduced viscosity (RV) of the polymer, (measured as a 1% by weight solution of the polymer in dimethylformamide at 25°C) is at least 0.2 and preferably at least 0.4. The polymer may be such as to give an RV of up to 2.5, but it is generally preferred that the RV of the polymer does not exceed 2.0.

The copolymer which is to be sulphonated is conveniently prepared using a mixture of monomers to produce the desired repeat units III and IV and hence the units III and IV are distributed in

a random fashion along the polymer chain. Hence, in the sulphonated copolymer, the units II (and IV) and III are also distributed in a random fashion along the polymer chain.

The sulphonated polysulphone contains the groups $-SO_3M$, where M may be hydrogen, a metal atom or a group $NR_4$. Sulphonated polysulphones in which M is a divalent metal atom, particularly an alkaline earth metal, are the subject of our non prior published European Patent Application Publication No 145305 which also discloses a method for the production of such divalent metal salts and the use thereof for the production of asymmetric semi-permeable membranes.

As disclosed herein, it is preferred that the components of the solvent mixture, and the proportions thereof, are such that the solvent mixture has a delta-H, a delta-P and a delta-D having values in specified ranges. We have found that the preferred values of delta-H, delta-P and delta-D are dependent on the nature of the sulphonated polysulphone and, when a divalent metal salt is being used, the preferred value of delta-H is in a more limited range, specifically from 4 to 5.5

Solvent mixtures which may be used in accordance with the present invention include the systems hereinbefore described.

The sulphonated polysulphone is preferably soluble in the solvent mixture in an amount of at least 10% by weight, more preferably at least 15% by weight, especially at least 20% by weight, for example 25 to 30% by weight. The quantity of polymer dissolved in the solvent mixture should be such that the resulting solution can be cast into a membrane and this will be dependent no only on the two components of the solvent mixture but also on the sulphonated polysulphone, the molecular weight of the polymer and the degree of sulphonation of the polymer.

As is discussed in more detail hereafter, the solution of the present invention can be used for the production of membranes.

Solvent mixtures consisting of methyl ethyl ketone and water; acetone and water; and ethylene glycol and water, have been used to produce membranes from sulphonated polysulphones in which M is a hydrogen atom.

It is preferred that at least one component of the solvent

mixture is volatile and at least partially evaporates under the conditions of casting the solution. Preferably, the residue of the solvent mixture is such that evaporation of some or all of the volatile component causes the sulphonated polysulphone to become insoluble in the residue of the solvent mixture. The composition of the solvent mixture is preferably such that volatilisation of the more volatile component of the solvent mixture results in a mixture in which the sulphonated polysulphone is less soluble and from which precipitation of the sulphonated polysulphone occurs.

As is discussed herein, a wide range of solvent mixtures may be used. For sulphonated polysulphones containing repeat units of formula II and formula III, and possibly also repeat units of formula IV, we have obtained a solvent mixture having satisfactory characteristics from a mixture consisting of methyl ethyl ketone and water which contains at least 75% by weight of methyl ethyl ketone, the remainder being water. The solvent miture conveniently contains 80 to 90% by weight of methyl ethyl ketone the remainder being water, for example a mixture of 84% by weight of methyl ethyl ketone and 16% by weight of water.

Another solvent mixture consists of acetone and water and contains at least 80% by weight of acetone the remainder being water. This solvent mixture conveniently contains 85 to 95% by weight of acetone, the remainder being water, for example a mixture of 90% by weight of acetone and 10% by weight of water.

Yet a further solvent mixture consists of ethylene glycol and acetone. This solvent mixture conveniently contains 20 to 50% by weight of ethylene glycol, typically up to 40% by weight of ethylene glycol, the remainder being acetone.

The most suitable mixtures for any particular sulphonated polysulphone depend not only on the basic polymer structure, that is the unsulphonated material, but also upon the sulphonation ratio of the polymer. By "sulphonation ratio" we mean the ratio of the number of sulphonated phenylene residues in the sulphonated polymer to the number of unsulphonated phenylene residues in the sulphonated polymer. The sulphonation ratio is preferably determined by $C^{13}$ n.m.r., but infra-red techniques may also be used. We have found that titration

(which gives a measure of the ion-exchange capacity of the polymer) generally indicates a lower degree of sulphonation than is found by n.m.r. or infra-red. Accordingly, although titration can be used, it is not the preferred technique for determining the sulphonation ratio. In general, polymer having lower sulphonation ratios require solvent mixture in which the value of delta-H and delta-P for the solvent mixture is reduced. The most suitable mixtures for any given sulphonated polymer can be readily ascertained by trial.

The solution may be prepared by dissolving the sulphonated polysulphone in any suitable form, for example powder, chips, granules, in the mixed solvent to form a solution which preferably contains from 10% to 40% by weight of the sulphonated polysulphone.

Dissolution of the polymer and casting on the the support may be effected at ambient temperature but lower or higher temperatures may be used if desired, for example 0°C to 100°C. However, it will be appreciated that the temperature should be below the boiling point of either component of the solvent mixture.

The solution of the sulphonated polysulphone in the solvent mixture may include a swelling agent. A wide range of materials may be used as the swelling agent and these are typically water soluble compounds, especially bifunctional carboxylic acids. Maleic acid is a suitable swelling agent. The amount of the swelling agent is dependent on the particular swelling agent, the sulphonated polysulphone and the solvent mixture but generally will be at least 1% by weight of the total composition (swelling agent, sulphonated polysulphone and solvent mixture) and will not usually exceed 10% by weight of the total composition.

The solution of the sulphonated polysulphone is formed into a membrane by casting on a support. Casting onto the support may be effected at essentially ambient temperature but lower or higher temperatures may be used if desired. The support may be, for example, a non-porous plane surface such as a glass or metal plate or, alternatively, may be a porous support such as a fabric and, where appropriate, it may have a shape other than a plane surface. Sufficient of the solution is cast on to the support in conventional

manner to give a film of the desired thickness which may be adjusted as necessary by suitable mechanical means. It is preferred to produce a film having a thickness of at least 20 micrometres and not more than 300 micrometres, most preferably from 50 up to 250 micrometres, and especially from 75 to 200 micrometres. Alternatively, fine hollow fibres may be produced by extruding the solution through a die having a central mandrel, allowing some of the solvent to evaporate and then passing the fibres through a coagulation bath.

It is advantageous to allow at least partial evaporation of at least one component of the solvent mixture from the supported liquid film by exposing the latter to the atmosphere for a short time, for example 10 seconds to 5 minutes, before immersing the supported film in a coagulation bath. The coagulation bath may contain an aqueous solution, for example a solution of an inorganic salt such as sodium chloride or sodium nitrate, or may be a non-solvent liquid, or a liquid mixture, for example formed from one or more of the components of the solvent mixture. Preferably, the coagulation bath is an aqueous solution of a metal salt such as sodium chloride or sodium nitrate or is essentially pure water. To obtain a membrane of a higher flux, the coagulation bath may be a mixture of water and one or more of the components of the solvent mixture used in casting the membrane. However, it will be appreciated that the coagulation bath should not be a solvent for the sulphonated polysulphone. The temperature of the coagulation bath is generally between -20°C and 60°C, and is preferably below 5°C. The coagulation treatment may be between 1 minute and and several hours, for example between 5 and 60 minutes.

After the coagulation treatment the membrane is recovered. In the case of a non-porous support, the membrane is detached from the support but, in the case of a porous support, the membrane remains adhered to the support. The recovered membrane may be subjected to heat treatment in order to relax the structure. Such a heat treatment preferably includes an immersion in an aqueous solution of an inorganic salt at an elevated temperature, typically from 70°C to 150°C. This heat treatment may be effected with the membrane being held under pressure (4 to 100 $KN/m^2$) between porous supports, such as porous graphite, sintered stainless steel or filter paper on a non-porous

support. Once prepared, and after any heat treatment, the membrane is preferably washed with distilled water to remove any residual solvent and/or free ionic species and is then stored in distilled water until required.

Membranes obtained by the method of the invention may be used for the treatment of a wide variety of aqueous or non-aqueous solutions or suspensions by conventional reverse osmosis or ultrafiltration techniques. In particular they may be used for the desalination of sea water and for the purification of water, including brackish waters and industrial effluents. The membranes may also be used for gas separation.

To reduce the possibility of variations in membrane properties, it is desirable that all stages in the preparation of the casting solution, and the casting and coagulation steps, are effected under carefully controlled conditions of time, temperature and humidity. During the casting and subsequent evaporation, it is preferred that the humidity does not exceed about 65% relative humidity, for example in the range 35 to 50% relative humidity.

The accompanying drawing is a diagrammatic representation of a reverse osmosis cell in which the membranes of the present invention may be used.

The cell comprises a closed vessel 1 which is divided into two sections internally by a membrane 2. The membrane 2 is in contact with a sheet 3 of a porous material, for example filter paper, and sheet 3 is supported by a porous plate 4 which is not semi-permeable and which assists in preventing mechanical deformation of the membrane 2. The membrane 2, the sheet 3 and porous plate 4 are clamped at their edges to prevent leaking around the edges. The vessel 1 is divided by the membrane 2 into a large section 5 and a small section 6. The large section 5 is provided with two pipelines 7 and 8 for the supply and removal of liquid. The small section 6 is provided with a pipeline 9. In use, liquid under pressure, for example sea water at a pressure of $4MNm^{-2}$ or higher is passed into section 5 of the vessel 1 through pipeline 7 and is withdrawn through pipeline 8. The pressure is sufficient to cause reverse osmosis and some water passes through the membrane 2 into the section 6 from which it is

withdrawn through the pipeline 9. The apparatus can be operated at ambient temperature (about 25°C) but higher temperatures may be used. In a continuous process, a further pipeline may be connected to section 6 of the vessel 1 whereby a continuous flow of a carrier liquid, which is the liquid being collected, is passed through section 6. Other modifications and variations may be effected in the manner known to those skilled in the art.

Various aspects of the present invention are illustrated, but not limited, by the following Examples, in which all parts and percentages are by weight unless otherwise indicated.

EXAMPLES 1 AND 2

A sulphonated polyarylethersulphone copolymer containing about 20 mole % of units II and about 80 mole % of units III (as defined herein), in which $Ph^1$ and $Ph^2$ are para-phenylene residues and M is a hydrogen atom, having a sulphonation ratio of 1:10, and a reduced viscosity (as defined herein) of 0.82 was dissolved, at a temperature of 25°C, in solvent mixtures to give a 33% by weight solution of the copolymer in the solvent mixture. Details of the solvent mixtures used are given in Table One.

Table One

| Example | Solvent Mixture | | Delta value (a) |
|---|---|---|---|
| | Component | % by weight | |
| 1 | Water<br>Methyl ethyl ketone | 16<br>84 | D 7.53<br>P 5.9<br>H 4.4 |
| 2 | Water<br>Acetone | 10<br>90 | D 7.45<br>P 5.9<br>H 4.5 |

Notes to Table One

(a) Delta values for the solvent mixture, D is delta-D value

P is delta-P value and H is delta-H value.

The solution was filtered through a gauze with a mesh size of 30 micrometres and then centrifuged at 2000 rpm for 20 to 30 minutes.

The solution was cast on to a glass plate and a film of the desired thickness was formed on the plate with the aid of a brass spreader. After a minute evaporation in air, coagulation of the film was effected by immersion for 30 minutes in distilled water at about 0°C. The glass plate and the membrane formed on it were removed from the water and the membrane was removed from the glass plate. The membrane was washed with distilled water and then was stored in distilled water until tested.

The recovered membrane was tested using an apparatus of the type hereinbefore described and in which the membrane was placed in contact with a porous support and the exposed side, being the side exposed to the air during casting, was subjected to continuous feed of an aqueous solution of sodium chloride (0.2% by weight) pumped across the surface of the membrane at a gauge pressure of 600 p.s.i ($4.14\ MNm^{-2}$) and a temperature of 25°C. The liquid passing through the membrane was analysed. The results of two such experiments are given in Table Two.

Table Two

| Example (b) | Film Thickness (mm) | Flux ($m.day^{-1}$) (c) | S R (%) (d) |
|---|---|---|---|
| 1 | 0.15 | 0.28 | 76.9 |
| 2 | 0.15 | 0.33 | 79.1 |

Notes to Table Two

(b) The numbers of the Examples refer to the solvent mixtures as detailed in Table One.

(c) Flux is the volume (in $m^3$) of the solution which passes through the membrane (an area of one $m^2$) in one day and is expressed as m.day-1.

(d) S R is % salt rejection and is determined by measuring the conductivity of the solution fed to the membrane cell and measuring the conductivity of the solution permeating the membrane, and is given by the relationship

$$\% \text{ salt rejection} = 1 - \frac{\text{conductivity of permeate}}{\text{conductivity of feed.}} \times 100$$

EXAMPLES 3 to 5

The procedure of Examples 1 and 2 was repeated using various proportions of the polymer and a solvent mixture of ethylene glycol and acetone in different proportions.

Details of the solutions used and the results obtained are given in Table Three.

Table Three

| Example | Solution | | | Film Thickness (mm) | Flux ($m.day^{-1}$) (c) | S.R. (%) (d) |
|---|---|---|---|---|---|---|
| | Comp (e) | % by weight | Delta value (a) | | | |
| 3 | P | 20 | D 7.71 | 0.15 | 1.51 | 65.6 |
| | E | 20 | P 5.2 | | | |
| | A | 60 | H 5.2 | | | |
| 4 | P | 33.3 | D 7.77 | 0.15 | 1.68 | 62.5 |
| | E | 43.3 | P 5.2 | | | |
| | A | 23.3 | H 6.0 | | | |
| 5 | P | 20 | D 7.78 | 0.15 | 0.36 | 78.7 |
| | E | 30 | P 5.2 | | | |
| | A | 50 | H 6.2 | | | |

Notes to Table Three

(a) is as defined in Notes to Table One.

(c) and (d) are both as defined in Notes to Table Two.

(e) Comp is the component of the solution where

P is a sulphonated polyarylethersulphone copolymer as used in Examples 1 and 2;

E is ethylene glycol; and

A is acetone.

Claims

1. A solution of a sulphonated polyarylethersulphone in a solvent mixture wherein the solvent mixture contains at least two components, each of which is a liquid or a low melting solid which is a non-solvent or poor solvent for the sulphonated polyarylethersulphone, and one of which is a hydroxy group containing compound selected from water, an alkanol or a glycol and the other of which is a ketone.

2. A solution as claimed in claim 1 wherein the solvent mixture has a delta-H in the range from 3 to 8.5; a delta-P in the range from 4 to 8 and a delta-D in the range from 7.2 to 9.5.

3. A solution as claimed in either claim 1 or claim 2 wherein, at least in the presence of the sulphonated polyarylethersulphone, the solvent mixture forms a single liquid phase and none of the components of the solvent mixture reacts or complexes with any other component of the solvent mixture or with the sulphonated polyarylethersulphone.

4. A solution as claimed in any one of claims 1 to 3 wherein the solvent mixture consists of one component which is the hydroxy group containing compound and a second component which is the ketone.

5. A solution as claimed in claim 4 wherein the solvent mixture consists of two components which are such that

a) one component has a delta-P of less than 6 and the other component has a delta-P of at least 6; and/or

b) one component has a delta-H of less than 5 and the other component has a delta-H of at least 5.

6. A solution as claimed in claim 5 wherein the solvent mixture consists of two components which satisfy both of conditions (a) and (b).

7. A solution as claimed in any one of claims 4 to 6 wherein one component of the solvent mixture has a delta-P of less than 6 and a delta-H of less than 5 and the other component has a delta-P of at least 6 and a delta-H of at least 5.

8. A solution as claimed in any one of claims 1 to 7 wherein each component of the solvent mixture has a TLV of not less than about 100 ppm.

9. A solution as claimed in any one of claims 1 to 8 wherein the

solvent mixture consists of methyl ethyl ketone and water; acetone and water; or ethylene glycol and acetone.

10. A solution as claimed in any one of claims 1 to 9 wherein the sulphonated polyarylethersulphone has repeating units of the formula I

$$\text{I} \quad \left[ \left( Ph - O \right)_n Ph - SO_2 \right]$$

wherein

Ph represents a phenylene residue wherein at least some of the groups Ph are sulphonated; and

n is 1 or 2 and the value of n can differ along the polymer chain.

11. A solution as claimed in claim 10 wherein the sulphonated polyarylethersulphone is a material having repeat units of the formula

$$\text{II} \quad \left( Ph^1 - O - Ph^2 - O - Ph^1 - SO_2 \right)$$

together with repeat units of the formula

$$\text{III} \quad \left( Ph^1 - O - Ph^1 - SO_2 \right)$$

and optionally units of the formula

$$\text{IV} \quad \left( Ph^1 - O - Ph^1 - O - Ph^1 - SO_2 \right)$$

wherein

$Ph^1$ represents a phenylene residue;

$Ph^2$ represents a phenylene residue having one or two groups $- SO_3M$;

M is a hydrogen atom, a metal atom and/or a group $NR_4$, wherein the groups M may be the same or different and the proportion of the groups M is sufficient to combine with the unsatisfied valencies of the group $- SO_3$; and

R is a hydrogen atom or an alkyl group

12. A method for the production of an asymmetric semi-permeable membrane which method comprises forming a solution of a sulphonated polyarylethersulphone in a solvent mixture, casting the solution on a support to form a film on the support, immersing, in a coagulation bath, the cast film of the solution on the support and recovering a membrane from the coagulation bath, wherein the solution of the sulphonated polyarylethersulphone in the solvent mixture is as claimed in any one of claims 1 to 11.

13. A method as claimed in claim 12 wherein the coagulation bath is water or an aqueous solution of a metal salt.

14. An asymmetric semi-permeable membrane of thickness 50 up to 250 micrometres whenever obtained by the method of either claim 12 or claim 13.

15. A process for the desalination of sea water or for the purification of water including brackish waters or industrial effluents by effecting reverse osmosis or ultrafiltration using a membrane as claimed in claim 14 or as obtained by the process of either claim 12 or claim 13.

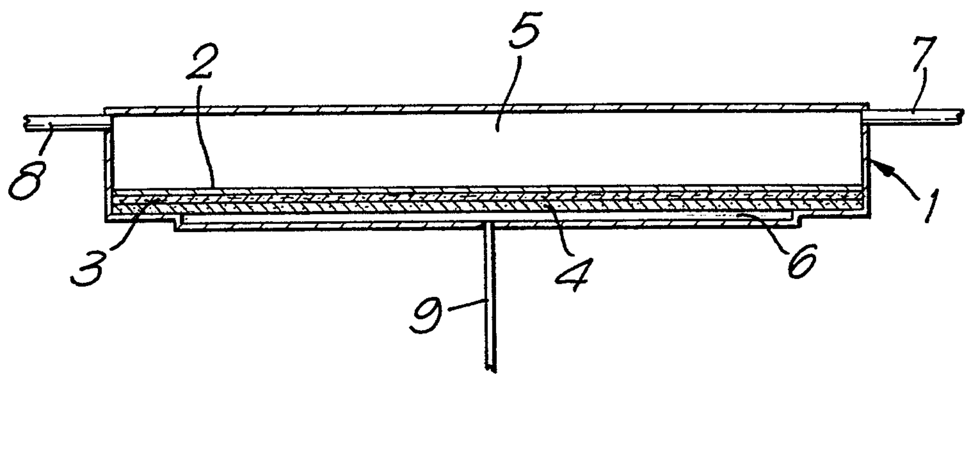
5
2
7
8
1
3
4
6
9